# EUROPÄISCHE PATENTSCHRIFT

(11) **EP 3 253 539 B1**
(45) Veröffentlichungstag und Bekanntmachung des Hinweises auf die Patenterteilung: **06.04.2022**
(21) Anmeldenummer: 16702103.9
(22) Anmeldetag: 29.01.2016
(51) Int. Cl.: B25J 9/16

(54) **MANIPULATORSYSTEM ZUR KOORDINIERTEN STEUERUNG VON ZUMINDEST ZWEI MANIPULATOREN**
MANIPULATOR SYSTEM FOR THE COORDINATED CONTROL OF AT LEAST TWO MANIPULATORS
SYSTÈME DE MANIPULATEURS POUR LA COMMANDE COORDONNÉE D'AU MOINS DEUX MANIPULATEURS

(30) Priorität: 05.02.2015 DE 102015202017
(43) Veröffentlichungstag der Anmeldung: 13.12.2017
(73) Patentinhaber: KUKA Deutschland GmbH, 86165 Augsburg (DE)
(72) Erfinder: SCHREIBER, Günter, 86316 Friedberg (DE)
(74) Vertreter: Mader, Joachim
(86) Internationale Anmeldenummer: PCT/EP2016/051910
(87) Internationale Veröffentlichungsnummer: WO 2016/124492

(56) Entgegenhaltungen:
- WO-A1-03/103903
- DE-A1- 10 349 452
- DE-A1-102009 056 578
- DE-T2- 60 127 908
- DE-T2- 69 600 806
- DE-T5-112008 003 042
- JP-A- H07 112 379
- US-A- 5 204 942
- US-B1- 6 408 710

## Beschreibung

### 1. Gebiet der Erfindung

Die Erfindung betrifft ein Manipulatorsystem zur koordinierten Steuerung von zumindest zwei Manipulatoren. Die koordinierte Steuerung von zumindest zwei Manipulatoren wird in Anwendungen eingesetzt, in denen mehrere Manipulatoren zusammenarbeiten sollen, um gemeinsam Aufgaben zu lösen, wie beispielsweise in industriellen Fertigungslinien.

### 2. Hintergrund

Als Manipulator wird in der Robotik ein Gerät verstanden, welches die physikalische Interaktion mit der Umgebung ermöglicht. Industrieroboter sind nach EN ISO 8373 automatisch geführte, mit drei oder mehr frei programmierbaren Bewegungsachsen ausgerüstete Mehrzweckmanipulatoren, die entweder ortsfest oder mobil in industriellen Anwendungen eingesetzt werden. Sie führen Greifer, Werkzeuge (Endeffektoren) oder Werkstücke und ähnliches.

Bewegungsachsen (Achsen) sind geführte, unabhängig voneinander angetriebene Glieder. Bei Manipulatoren dienen diese Achsen zur Erzeugung definierter Bewegungen zum Positionieren und Orientieren von Objekten. Die Glieder des Manipulators werden mittels Aktoren angetrieben, wobei die Aktoren üblicherweise Elektromotoren sind.

Die definierten Bewegungen zum Positionieren und Orientieren des Manipulators werden gewöhnlich durch einen Anwender geplant. Die so geplante Bahnbewegung des Manipulators umfasst typischerweise eine beliebige Trajektorie (Bewegungsbahn), die beispielsweise über Raumpunkte definiert ist, sowie Bahngeschwindigkeiten und Bahnbeschleunigungen. Die geplante Bahnbewegung des Manipulators wird mittels einer Ablaufsteuerung einer dem Manipulator zugeordneten Manipulatorsteuerungsvorrichtung zur Verfügung gestellt. In der dem Manipulator zugeordneten Manipulatorsteuerungsvorrichtung wird die Ablaufsteuerung in Befehle zur Ansteuerung des Manipulators umgesetzt. Bekannte Manipulatorsteuerungsvorrichtungen umfassen eine Manipulatorsteuerung und zumindest eine Achssteuerung. Die Manipulatorsteuerung setzt die Ablaufsteuerung und somit die geplante Bahnbewegung des Manipulators in Steuerbefehle für eine Achssteuerung um. Diese Steuerbefehle umfassen typischerweise Informationen zu den bevorzugten Drehwinkeln, Geschwindigkeiten und Beschleunigungen der einzelnen Achsen des Manipulators, um die geplante Bahnbewegung, umfassend Trajektorie, Bahngeschwindigkeit und Bahnbeschleunigung des Manipulators zu erzielen.

Die an die Achssteuerung gesendeten Steuerungsbefehle zur Ansteuerung der Achsen werden von der Achssteuerung in Umrichterbefehle umgesetzt. Die Umrichterbefehle enthalten für jede Achse, entsprechend der geplanten Bahnbewegung, ein Soll-Motordrehmoment, eine Soll-Motorgeschwindigkeit und/oder einen Soll-Motorstrom. Die Umrichterbefehle der Achssteuerung werden in dem, dem Aktor zugeordneten Umrichter derart umgesetzt, dass die dem Aktor zur Verfügung gestellte Energie, welche in Form eines Wechselstroms oder Gleichstrom vorliegt, in einen in Amplitude und/oder Frequenz veränderbaren Wechselstrom gewandelt wird. Typischerweise sind die Aktoren elektrische Drehstrommaschinen, sodass die zur Verfügung gestellte Energie in einen variablen dreiphasigen Wechselstrom gewandelt wird. Ebenso sind wechselspannungsbasierte Umrichter üblich. Durch die Anpassung der Amplitude und/oder Frequenz kann die Geschwindigkeit und/oder Beschleunigung sowie die Drehrichtung des Aktors und somit die geplante Bahnbewegung des Manipulators umgesetzt werden.

Konventionelle Manipulatorsteuerungsvorrichtungen umfassen die oben beschriebenen Komponenten wie Ablaufsteuerung, Manipulatorsteuerung, Achssteuerung und Umrichter und sind in einem einzigen Schaltschrank integriert. Dies ist vorteilhaft, da so eine einfachere Kühlung der Komponenten erfolgen und die Kommunikation zwischen den einzelnen Komponenten mit einer internen Busphysik realisiert werden kann. In solchen Anwendungen wird der durch die Umrichter erzeugte variable Wechselstrom den Aktoren über energieführende Leitungen zur Verfügung gestellt, so dass der Manipulator selbst mit der Manipulatorsteuerungsvorrichtung verbunden ist. Üblicherweise sind hierbei lange Wege vom Schaltschrank zum Manipulator zu überbrücken, wodurch Leitungsverluste in den energieführenden Leitungen hervorgerufen werden und ein hoher Verkabelungsaufwand entsteht.

Zum koordinierten Betrieb mehrerer Manipulatoren in einer Anwendung werden typischerweise die Manipulatorsteuerungen, die Achssteuerungen und die Umrichter aller Manipulatoren von einer zentralen Ablaufsteuerung befehligt und in einem einzigen Schaltschrank verbaut. So kann auch zur Koordination der Bahnbewegungen der Manipulatoren die interne Busphysik genutzt werden. Folglich entsteht eine zentrale Multi-Manipulatorsteuerungsvorrichtung, in welcher die Steuerung des Gesamtsystems abläuft. Solche Systeme sind jedoch kaum erweiterbar, was in industriellen Anwendungen eine wichtige Anforderung ist. Der Anwender ist daher gezwungen, die Multi-Manipulatorsteuerungsvorrichtung zu ersetzen, wenn ein weiterer Manipulator in das System integriert werden soll. Alternativ müssen entsprechende Überkapazitäten bereitgehalten werden, um weitere Manipulatoren in die Anwendung integrieren zu können. Dies verursacht hohe

Manipulatorsteuerungen zur koordinierten Steuerung mehreren Manipulatoren sind aus WO 03/103903 A1, DE 601 27 908 T2 und US 5 204 942 A bekannt.

### 3. Ausführliche Beschreibung der Erfindung

Die Aufgabe des erfindungsgemäßen Manipulatorsystems ist es, die genannten Nachteile auszuräumen oder zumindest zu vermindern. Die Aufgabe wird durch ein Manipulatorsystem nach den unabhängigen Ansprüchen gelöst.

Insbesondere werden die Aufgaben gelöst durch ein Manipulatorsystem zur koordinierten Steuerung von zumindest zwei Manipulatoren, umfassend: einen Hauptcomputer, der dazu eingerichtet ist, eine Ablaufsteuerung auszuführen, zumindest zwei mehrachsige Manipulatoren, wobei jedem Manipulator eine Manipulatorsteuerung zugeordnet ist, welche Manipulatorsteuerungen vom Hauptcomputer räumlich getrennt, in jeweils einem eigenen Gehäuse eingerichtet sind, und wobei jeder Manipulator Umrichter zum Ansteuern der Aktoren der Achsen des Manipulators umfasst, wobei der einem Aktor zugeordnete Umrichter in der Nähe des Aktors angeordnet ist, in der Art, dass der Umrichter bei einer Bewegung des Manipulators mitbewegt werden kann.

Die räumliche Trennung von Hauptcomputer und den Manipulatorsteuerungen ermöglicht es das Manipulatorsystem für etwaige Erweiterungen, d.h. für die Integration weitere Manipulatoren in das Manipulatorsystem flexibel zu gestalten, ohne bereits bei der ersten Einrichtung des Hauptcomputers die finale Anzahl von Manipulatoren kennen zu müssen. Bevorzugt sind die Manipulatorsteuerungen dabei über eine Busverbindung mit dem Hauptcomputer verbunden. Dadurch kann der Verkabelungsaufwand bei der Installation des Manipulatorsystems deutlich reduziert werden. Ebenso kann der Schaltschrank des Hauptcomputers durch die Auslagerung der Manipulatorsteuerungen in seinen Dimensionen deutlich reduziert werden.

Weiterhin wird es durch die räumliche Trennung von Hauptcomputer und den Manipulatorsteuerungen möglich, die Manipulatorsteuerungen in unmittelbarer Nähe der zugeordneten Manipulatoren einzurichten.

Infolgedessen können die Signalwege von den Manipulatorsteuerungen zu den Umrichtern kurz gehalten werden. Insbesondere bei der Verwendung analoger Signale erhöht sich zudem der Schutz vor Störungen, wodurch eine höhere Zuverlässigkeit des Manipulatorsystems erzielt werden kann.

Die bevorzugte Verwendung von Busverbindungen zwischen Hauptcomputer und Manipulatorsteuerungen ermöglicht die Nutzung von Fehlerprotokollen. Daher sind Busverbindungen auch für längere Übertragungswege der Signale gut geeignet.

Durch die Anordnung der Umrichter in der Nähe eines Aktors, in der Art, dass der Umrichter bei einer Bewegung des Manipulators mitbewegt werden kann, können die energieführenden Leitungen vom Umrichter zum Aktor deutlich verkürzt werden. Dies führt zu einer signifikanten Reduzierung der Leitungsverluste. Weiterhin ist es möglich den Manipulator selbst mit nur einer energieführenden Leitung zu versorgen, die erst im Manipulator aufgespalten wird, um wiederum die einzelnen Umrichter mit Energie zu versorgen. Bei vorbekannten Lösungen, in denen die Umrichter im Schaltschrank integriert sind, ist es zwingend notwendig jeden Aktor mit einer eigenen energieführenden Leitung zu versorgen.

Bevorzugt ist der einem Aktor zugeordnete Umrichter in einem Manipulatorarm angeordnet. Durch die Anordnung der Umrichter im Manipulatorarm selbst, sind die Umrichter vor Umwelteinflüssen geschützt. Dies ist insbesondere vorteilhaft, wenn die Manipulatoren in einem staubigen oder feuchten Umfeld eingesetzt werden sollen.

Erfingundsgemäß ist jedem Manipulator des Manipulatorsystems zumindest eine Achssteuerung zugeordnet, wobei die zumindest eine Achssteuerung (d.h. die Hardware) vorzugsweise derart am Manipulator angeordnet ist, dass die zumindest eine Achssteuerung bei einer Bewegung des Manipulators mitbewegt werden kann.

Die Anordnung der Achssteuerungen (d.h. der Hardware) am Manipulator ist insbesondere vorteilhaft, da üblicherweise die Regelung der Aktoren bzw. der Umrichter der Aktoren in der Achssteuerung abläuft. Die von den Aktoren zurück geführten Signale können so über sehr kurze Signalwege zur Regelung geführt werden, wodurch zum der Verkabelungsaufwand reduziert werden kann und mögliche Störungen bei der Signalleitung reduziert oder vermieden werden können.

Bevorzugt sind die zumindest zwei Achssteuerungen dem Hauptcomputer in einer Kettentopologie oder in einer Sterntopologie zugeordnet.

Bei der Sterntopologie sind an den Hauptcomputer alle Manipulatorsteuerungen direkt angeschlossen. Die Sterntopologie ermöglicht hohe Übertragungsraten, was insbesondere bei komplexen Bahnbewegungen der Manipulatoren, welche koordiniert werden sollen vorteilhaft ist. Weiterhin ist die Sterntopologie leicht erweiterbar und aufgrund des einfachen Aufbaus auch leicht zu warten. Überdies kann bei einem Ausfall einer Manipulatorsteuerung das restliche Manipulatorsystem ohne weitere Einschränkungen den Betrieb fortsetzten.

Bei der Kettentopologie ist eine erste Manipulatorsteuerung beispielsweise über eine Busverbindung mit dem Hauptcomputer verbunden. Die weiteren Manipulatorsteuerungen sind nun jeweils mit ihren Vorgängern verbunden (Reihenschaltung). Das Signal zu und von einer Manipulatorsteuerung geht über ihre Vorgänger bis zum Hauptcomputer. Bei dieser Topologie müssen Prioritäten vergeben werden. Somit ist festgelegt, dass Informationen zum Beispiel nur dann übermittelt werden können, wenn die Leitung frei ist. Überdies kann festgelegt werden, dass einige Manipulatorsteuerungen unbedingten Vorrang gegenüber anderen haben. Dadurch lassen sich Konflikte und Fehlfunktionen verhindern, oder besonders priorisierte Befehle, wie beispielsweise sicherheitsrelevante Befehle sofort ausführen.

Bevorzugt umfasst die Ablaufsteuerung geplante Bahnbewegungen der zumindest zwei Manipulatoren, und der Hauptcomputer eine Befehlsweiche, welche dazu eingerichtet ist geplante Bahnbewegungen der zumindest zwei Manipulatoren zu koordinieren.

Die Koordination der geplanten Bahnbewegungen der zumindest zwei Manipulatoren kann in einer vorher bestimmten Weise, beispielsweise über einen festgelegten zeitlichen Ablauf einzelner Bewegungen der beteiligten Manipulatoren erfolgen. Ebenso können auch Bewegungsbedingungen in einer vorher bestimmten Weise die Koordination der geplanten Bahnbewegung der zumindest zwei Manipulatoren beeinflussen. Solche Bewegungsbedingungen umfassen bevorzugt Positionsbedingungen, Orientierungsbedingungen, Geschwindigkeitsbedingungen und/oder Beschleunigungsbedingungen.

Beispielsweise darf ein erster Manipulator seine geplante Bahnbewegung erst dann fortsetzen, wenn eine Bewegungsbedingung eines zweiten Manipulators erfüllt ist. Diese Bewegungsbedingung kann beispielsweise umfassen, dass der Endeffektor des Manipulators an einer bestimmten Position und in einer bestimmten Orientierung zum Stehen gekommen ist.

Die Koordination von der geplanten Bahnbewegung der zumindest zwei Manipulatoren ist insbesondere von Vorteil in Anwendungen, in denen ein Manipulator ein Werkstück führt, und ein zweiter Manipulator das von dem ersten Manipulator geführte Werkstück bearbeitet. Dies ermöglicht sehr flexible Bearbeitungsschritte. Verläuft beispielsweise beim Schweißen eine Schweißbahn um ein Werkstück herum, und kann ein einzelner Manipulator diese Schweißbahn nicht vollständig abfahren ohne Absetzten zu müssen, so ist es möglich das Werkstück mit einem zweiten Manipulator während des Schweißens in der Art zu positionieren bzw. zu orientieren, dass der erste Manipulator, welcher der Schweißmanipulator ist, die Schweißbahn ohne abzusetzen schweißen kann.

Durch die Integration der geplanten Bahnbewegungen der zumindest zwei Manipulatoren in eine Ablaufsteuerung, welche auf dem Hauptcomputer läuft, kann der Koordinationsaufwand reduziert werden, da kein Abgleich mehrerer Ablaufsteuerungen erfolgen muss. Zudem ermöglicht die Koordination der geplanten Bahnbewegungen auf der hierarchischen Systemebene der Manipulatorsteuerungen, dass die Regelung der Bewegung der Manipulatoren in den jeweiligen Manipulatorsteuerungen, und die Regelung der einzelnen Achsen des Manipulators in den Achssteuerungen durchgeführt werden kann und so von der Ablaufsteuerung getrennt wird. Hierdurch kann die benötigte Rechenkapazität des Systems reduziert werden.

Bevorzugt ist der Hauptcomputer dazu eingerichtet, Befehle der Ablaufsteuerung an die Manipulatorsteuerungen zu senden, und die jeweilige Manipulatorsteuerung ist dazu eingerichtet Befehle zur Ansteuerung der Achsen des Manipulators an die zumindest eine Achssteuerung zu senden, und die Achssteuerung ist bevorzugt dazu eingerichtet Befehle zur Ansteuerung der Achsen in Umrichterbefehle umzusetzen.

Diese Anordnung ist vorteilhaft, da die jeweilige Manipulatorsteuerung die ihr zugeteilten Befehle der Ablaufsteuerung umsetzen kann. Somit erfolgt die Umsetzung der Befehle der Ablaufsteuerung separat auf einer eigenen Systemebene. Auch etwaige Regelungen der Bewegung des der Manipulatorsteuerung zugeordneten Manipulators können so separat auf einer eigenen Systemebene erfolgen. Diese Anordnung ist weiter vorteilhaft, da die Achssteuerung die Umrichterbefehle auf einer unteren hierarchischen Systemebene erzeugen kann. Somit kann auch die korrekte Umsetzung der Umrichterbefehle auf dieser Systemebene überwacht werden und die Regelung der Umrichter auf dieser Systemebene erfolgen. Folglich müssen durch die Anordnung weniger Signale ausgetauscht werden, wodurch eine hohe Robustheit des Systems erzielt wird.

Bevorzugt werden die Aufgaben auch gelöst durch ein Manipulatorsystem zur koordinierten Steuerung von zumindest zwei Manipulatoren, umfassend eine Hauptsteuerungsvorrichtung, die einem ersten der zumindest zwei Manipulatoren zugeordnet ist, und die dazu eingerichtet ist, eine Ablaufsteuerung auszuführen, wobei die Hauptsteuerungsvorrichtung eine Befehlsweiche und eine Manipulatorsteuerung umfasst und wobei die Befehlsweiche dazu eingerichtet ist, Befehle der Ablaufsteuerung an die Manipulatorsteuerung zu senden, und wobei die Manipulatorsteuerung dazu eingerichtet ist, um Befehle zur Ansteuerung der Achsen des ersten Manipulators an die Achssteuerung zu senden, und die Achssteuerung dazu eingerichtet ist, Befehle zur Ansteuerung der Achsen in Umrichterbefehle umzusetzen, sowie zumindest eine Nebensteuerungsvorrichtung, die dem zweiten der zumindest zwei Manipulatoren zugeordnet ist, und welche zumindest eine Nebensteuerungsvorrichtung von der Hauptsteuerungsvorrichtung räumlich getrennt, in einem eigenen Gehäuse eingerichtet ist, und eine eigenständige Energieversorgung aufweist, wobei die zumindest eine Nebensteuerungsvorrichtung eine Manipulatorsteuerung umfasst, und wobei die Befehlsweiche der Hauptsteuerungsvorrichtung derart eingerichtet ist, um Befehle der Ablaufsteuerung an die (zweite) Manipulatorsteuerung zu senden, wobei die (zweite) Manipulatorsteuerung dazu eingerichtet ist Befehle zur Ansteuerung der Achsen des zweiten Manipulators an die Achssteuerung des zweiten Manipulators zu senden, und die Achssteuerung dazu eingerichtet ist, Befehle zur Ansteuerung der Achsen in Umrichterbefehle umzusetzen.

Durch die Verwendung einer Hauptsteuervorrichtung im Manipulatorsystem ist es möglich die koordinierte Steuerung von zumindest zwei Manipulatoren ohne einen Hauptcomputer und ohne eine zentrale Multi-Manipulatorsteuerungsvorrichtung durchzuführen. Als Hauptsteuerungsvorrichtung wird bevorzugt eine Manipulatorsteuerungsvorrichtung mit ausreichender Rechenleistung zur Koordination der geplanten Bewegungen der Manipulatoren genutzt. Somit sind zur Koordination der geplanten Bewegungen der Manipulatoren keine zusätzlichen Hardwarekomponenten im Manipulatorsystem erforderlich.

Vorzugsweise kann die zumindest eine Nebensteuerungsvorrichtung in ihrer Hardwarekonfiguration der Hauptsteuerungsvorrichtung entsprechen. Die Unterscheidung zwischen Hauptsteuerungsvorrichtung und Nebensteuerungsvorrichtung ergibt sich sodann aus der Softwarekonfiguration der Steuerungsvorrichtungen. Während die Hauptsteuerungsvorrichtung eine Ablaufsteuerung und eine Befehlsweiche umfasst, sind diese Komponenten auf der Nebensteuerungsvorrichtung nicht (in Software) implementiert. Dies ermöglicht die Verwendung baugleicher Steuerungsvorrichtungen, welche als Neben- oder Hauptsteuerungsvorrichtung verwendet werden können und ermöglicht aufgrund einer geringen Variantenzahl Kosten zu reduzieren.

Die räumliche Trennung von Hauptsteuerungsvorrichtung und der Nebensteuerungsvorrichtung ermöglicht es, das Manipulatorsystem für etwaige Erweiterungen flexibel zu machen. Bevorzugt ist die Nebensteuerungsvorrichtung über eine Busverbindung mit der Hauptsteuerungsvorrichtung verbunden. Dadurch kann der Verkabelungsaufwand bei der Installation des Manipulatorsystems deutlich reduziert werden. Eine eigenständige Energieversorgung der Hauptsteuerungsvorrichtung und eine eigenständige Energieversorgung der Nebensteuerungsvorrichtung ermöglicht es, die Hauptsteuerungsvorrichtung und/oder Nebensteuerungsvorrichtung nahezu beliebig räumlich im Manipulatorsystem anzuordnen. Weiterhin kann durch die räumliche Trennung der Hauptsteuerungsvorrichtung und der Nebensteuerungsvorrichtung, die Hauptsteuerungsvorrichtung und/oder die Nebensteuerungsvorrichtung in unmittelbarer Nähe der zugeordneten Manipulatoren eingerichtet werden. Infolgedessen können die Signalwege von der Hauptsteuerungsvorrichtung und/oder der Nebensteuerungsvorrichtung zu den Manipulatoren kurz gehalten werden. Auch die energieführenden Leitungen von den Umrichtern der Hauptsteuerungsvorrichtung und/oder der Nebensteuerungsvorrichtung zu den Aktoren der Manipulatoren können entsprechend kurz gehalten werden, was zu einer Reduzierung der Leitungsverluste führt.

Die bevorzugte Verwendung einer Busverbindung zwischen Hauptsteuerungsvorrichtung und Nebensteuerungsvorrichtung ermöglicht die Nutzung von Fehlerprotokollen. Die Busverbindung ist daher auch für längere Übertragungswege der Signale optimal geeignet.

Durch die Einrichtung der Befehlsweiche in der Hauptsteuerungsvorrichtung derart, dass die Befehle der Ablaufsteuerung zur Ansteuerung des ersten Manipulators an die Manipulatorsteuerung des ersten Manipulators und Befehle der Ablaufsteuerung zur Ansteuerung des zweiten Manipulators an die Manipulatorsteuerung des zweiten Manipulators gesendet werden können, kann die Koordination der geplanten Bahnbewegungen der zumindest zwei Manipulatoren in der Befehlsweiche der Hauptsteuerungsvorrichtung erfolgen. Die Regelung und Überwachung der Bewegung der Manipulatoren erfolgt bevorzugt in den Manipulatorsteuerungen und besonders bevorzugt in den Achssteuerungen.

Diese Anordnung ist vorteilhaft, da die Manipulatorsteuerungen und die Achssteuerungen die Regelung und Überwachung der Bewegung der Manipulatoren auf einer unteren hierarchischen Systemebene ausführen. Dadurch müssen keine Signale zur Regelung der Bewegung der Manipulatoren oder zur Regelung der Achsen zu der Ablaufsteuerung gesendet werden, wodurch eine hohe Robustheit des Systems erzielt wird.

Bevorzugt umfasst das Manipulatorsystem einen dritten Manipulator mit einer dritten Nebensteuerungsvorrichtung und die Nebensteuerungsvorrichtungen sind der Hauptsteuerungsvorrichtung bevorzugt in einer Kettentopologie oder in einer Sterntopologie zugeordnet.

Wie bereits oben beschrieben, ermöglicht die Sterntopologie hohe Übertragungsraten und ist neben anderen Vorteilen auch leicht erweiterbar. Die Kettentopologie ermöglicht, wie oben beschrieben beispielsweise die einfache Priorisierung einzelner Teilnehmer. Dabei bildet die Hauptsteuerungsvorrichtung in der Sterntopologie den zentralen Teilnehmer des Netzes. In der Kettentopologie bildet die Hauptsteuerungsvorrichtung den ersten Teilnehmer. Die Nebensteuerungsvorrichtungen werden entsprechend der Topologie der Hauptsteuerungsvorrichtung zugeordnet.

Bevorzugt umfasst die Ablaufsteuerung geplante Bahnbewegungen der zumindest zwei Manipulatoren. Durch die Integration der geplanten Bahnbewegungen der zumindest zwei Manipulatoren in eine Ablaufsteuerung, welche in der Hauptsteuerungsvorrichtung läuft, kann der Koordinationsaufwand reduziert werden, da kein Abgleich mehrerer Ablaufsteuerungen erfolgen muss.

Bevorzugt werden die Aufgaben auch gelöst durch ein Manipulatorsystem zur koordinierten Steuerung von zumindest zwei Manipulatoren, umfassend zumindest zwei nebengeordnete Hauptsteuerungsvorrichtungen, wobei jeder Hauptsteuerungsvorrichtung einer der zumindest zwei Manipulatoren zugeordnet ist, und jede Hauptsteuerungsvorrichtung dazu eingerichtet ist, eine Ablaufsteuerung des der Hauptsteuerungsvorrichtung zugeordneten Manipulators auszuführen, wobei jede der Hauptsteuerungsvorrichtungen eine Manipulatorsteuerung und eine Achssteuerung umfasst, und wobei die Manipulatorsteuerung eingerichtet ist, um Befehle zur Ansteuerung der Achsen des der Hauptsteuerungsvorrichtung zugeordneten Manipulators an die Achssteuerung zu senden, und die Achssteuerung dazu eingerichtet ist, Befehle zur Ansteuerung der Achsen in Umrichterbefehle umzusetzen, wobei die nebengeordneten Hauptsteuerungsvorrichtungen voneinander räumlich getrennt, in jeweils einem eigenen Gehäuse eingerichtet sind und jeweils eine eigenständige Energieversorgung aufweisen, sowie eine Koordinationssteuerungsvorrichtung, welche von den nebengeordneten Hauptsteuerungsvorrichtungen räumlich getrennt, in einem eigenen Gehäuse eingerichtet ist und eine eigenständige Energieversorgung aufweist, wobei die Koordinationssteuerungsvorrichtung dazu eingerichtet ist, die Ablaufsteuerungen der zumindest zwei Manipulatoren derart zu koordinieren, dass der Programmablauf der Ablaufsteuerung in einer vorherbestimmten Weise erfolgt.

Durch die Verwendung von zumindest zwei nebengeordneten Hauptsteuervorrichtungen im Manipulatorsystem ist es möglich die Ablaufsteuerung, umfassend die geplante Bahnbewegung des, der jeweiligen Hauptsteuerungsvorrichtung zugeordneten Manipulators in dieser Hauptsteuerungsvorrichtung auszuführen.

Die Hauptsteuerungsvorrichtungen sind bevorzugt Manipulatorsteuerungsvorrichtungen die bevorzugt über eine Busverbindung mit der Koordinationssteuerungsvorrichtung verbunden sind. Die Manipulatorsteuerung der jeweiligen Hauptsteuerungsvorrichtung setzt dabei die Ablaufsteuerung in Befehle zur Ansteuerung der Achsen des Manipulators um und sendet diese Befehle an die Achssteuerung des zugeordneten Manipulators.

Die Koordination der Bahnbewegungen der zumindest zwei Manipulatoren erfolgt in der separaten Koordinationssteuerungsvorrichtung. Folglich ist bei der Ausführung der geplanten Bahnbewegung mittels der nebengeordneten Hauptsteuerungsvorrichtungen keine Störung der Bahnbewegungsausführung durch zusätzliche Rechenaufgaben, wie der Koordination der geplanten Bahnbewegungen der zumindest zwei Manipulatoren zu erwarten. Weiterhin ist die Koordination der geplanten Bahnbewegungen der zumindest zwei Manipulatoren mit einem minimalen Austausch von Signalen möglich, da nur die zur Koordination benötigte Signale an bzw. von der Koordinationssteuerungsvorrichtung gesendet werden müssen.

Die Koordination der Bahnbewegungen der zumindest zwei Manipulatoren mittels der separaten Koordinationssteuerungsvorrichtung ermöglicht überdies, direkt in die Manipulatorsteuerungen der Manipulatoren einzugreifen um die Zusammenarbeit der Manipulatoren zu verbessern und insbesondere Taktzeiten zu verkürzen. Beispielsweise kann, falls der zweite Manipulator eine weitere Bewegung erst dann ausführen darf, wenn eine Positionsbedingung des ersten Manipulators erfüllt ist, die Geschwindigkeit des ersten Manipulators durch das Eingreifen der Koordinationssteuerungsvorrichtung erhöht werden, um die Wartezeit des zweiten Manipulators zu verkürzen. Die Koordinationssteuerungsvorrichtung kann so zur Optimierung der Zusammenarbeit der Manipulatoren die Manipulatorsteuerungen beider Manipulatoren beeinflussen. Dazu kann die Koordinationssteuerungsvorrichtung auf Parameter, wie die Manipulatorgeschwindigkeit, die Manipulatorbeschleunigung oder andere Manipulatorparameter zugreifen.

Die Verwendung einer Koordinationssteuerungsvorrichtung mit nebengeordneten Hauptsteuerungsvorrichtungen ermöglicht überdies die einfache Erweiterung des Manipulatorsystems mit weiteren Manipulatoren. Da die Hauptsteuerungsvorrichtungen die Ablaufsteuerung, umfassend die geplante Bahnbewegung des zugeordneten Manipulators, ausführen, bildet die Hauptsteuerungsvorrichtung umfassend die Ablaufsteuerung zusammen mit dem Manipulator eine eigenständige Einheit. Zur Koordination mehrerer Manipulatoren muss folglich nur das Koordinationsprogramm, welches auf der Koordinationssteuerungsvorrichtung ausgeführt wird, angepasst werden. Somit ist eine einfache Erweiterung des Manipulatorsystems möglich.

Auch die räumliche Trennung der nebengeordneten Hauptsteuerungsvorrichtungen und der Koordinationssteuerungsvorrichtung ermöglicht die einfache Erweiterung des Manipulatorsystems. Durch die eigenständige Energieversorgung der Hauptsteuerungsvorrichtungen und der Koordinationssteuerungsvorrichtung können diese räumlich nahezu beliebig angeordnet werden. Insbesondere werden diese in unmittelbarer Nähe der zugeordneten Manipulatoren angeordnet, um die Leitungslänge der energieführenden Leitungen zu reduzieren und so Leitungsverluste zu vermeiden.

Bevorzugt umfasst jede Ablaufsteuerung geplante Bahnbewegungen des Manipulators, welcher der Hauptsteuerungsvorrichtung der Ablaufsteuerung zugeordnet ist. Durch die Bereitstellung separater Ablaufsteuerungen für die geplanten Bahnbewegungen eines jeden Manipulators kann jede nebengeordnete Hauptsteuerungsvorrichtung den Manipulator wie beschrieben ansteuern. Somit wird nur die Koordination der geplanten Bahnbewegungen der Manipulatoren aus den nebengeordneten Hauptsteuerungsvorrichtungen ausgelagert und schließlich von der Koordinationssteuerungsvorrichtung ausgeführt.

Bevorzugt werden jedem Manipulator Umrichter zum Ansteuern der Aktoren der Achsen des Manipulators zugeordnet, wobei die Umrichter in dem Gehäuse der Hauptsteuerungsvorrichtung und/oder Nebensteuerungsvorrichtung, welcher der Manipulator zugeordnet ist eingerichtet sind.

Bevorzugt ist zumindest ein Manipulator des Manipulatorsystems ein Industrieroboter, und der zumindest zweite Manipulator an einer Achse des Industrieroboters eingerichtet. Wird der zweite Manipulator an einer Achse des Industrieroboters eingerichtet, so können dem Industrieroboter neben den bereits vorhandenen Freiheitsgraden weitere Freiheitsgrade in Form der Achsen des zweiten Manipulators zur Verfügung gestellt werden. Dadurch sind komplexe Bewegungen, die mit den Freiheitsgraden des eigentlichen Industrieroboters nicht realisiert werden können realisierbar, da die Koordination des Industrieroboter und der zusätzlichen Achsen, d.h. des zweiten Manipulators, wie oben beschrieben einfach realisiert werden kann.

Ebenso kann der zweite Manipulator ein Werkzeug sein, welches am Industrieroboter angebracht werden kann und über zumindest eine steuerbare Achse bzw. einen steuerbaren Aktor verfügt. Der zweite Manipulator kann folglich vom Industrieroboter positioniert und/oder orientiert werden.

Bevorzugt ist das Manipulatorsystem in der Art eingerichtet, dass die Koordination der geplanten Bahnbewegungen der Manipulatoren mittels einer Echtzeitsynchronisation durchgeführt wird. Die Echtzeitsynchronisation kann dabei über echtzeitfähige Busverbindungen oder über ein deterministisches Echtzeit-Interface erfolgen. Dazu wird entweder der Hauptcomputer mit den Manipulatorsteuerungen, oder die Hauptsteuerungsvorrichtung mit den Nebensteuerungsvorrichtungen, oder die nebengeordneten Hauptsteuerungsvorrichtungen und die Koordinationssteuerungsvorrichtung über ein deterministisches Echtzeit-Interface verbunden. Somit kann sichergestellt werden, dass bei der Koordination der geplanten Bahnbewegungen der Manipulatoren die benötigten Rechenergebnisse der koordinierten Steuerung innerhalb eines definierten Zeitintervalls garantiert vorliegen. Eine Regelung der koordinierten, geplanten Bahnbewegungen der zumindest zwei Manipulatoren ist folglich möglich.

Bevorzugt ist die Achssteuerung des Manipulatorsystems eine intelligente Achssteuerung, wobei die intelligente Achssteuerung eine Achswinkelsteuerung der einzelnen Achsen des Manipulators und eine übergeordnete kartesische Steuerung umfasst. Eine intelligente Achssteuerung ist vorteilhaft, da in der hierarchischen Systemebene der Achssteuerungen die Regelung der Achsen des Manipulators nicht einzeln und getrennt voneinander erfolgen muss. Vielmehr ist es möglich, bei der Regelung einer einzelnen Achse auch Bewegungen der anderen Achsen zu berücksichtigen, wodurch komplexere Bewegungsabläufe realisiert werden und höhere Bahngeschwindigkeiten und Bahnbeschleunigungen erreicht werden können. Dies ist insbesondere in industriellen Anwendungen vorteilhaft, da so geringere Taktzeiten realisiert werden können, wodurch das Manipulatorsystem wirtschaftlicher arbeiten kann.

Bevorzugt kann ein zumindest zweiter Manipulator unabhängig von einer Störung eines ersten Manipulators angesteuert werden, wobei sich der zumindest zweite Manipulator entsprechend der Ansteuerung verhält. Dies ist vorteilhaft, da das Manipulatorsystem auch dann weiter betrieben werden kann, wenn einer der Manipulatoren aufgrund einer Störung ausfällt. Wenn beispielsweise eine Störung in einer Manipulatorsteuerung, einer Achssteuerung oder einer Nebensteuerungsvorrichtung vorliegt, so fällt nur der direkt betroffene Manipulator aus. Die übrigen Manipulatoren des Manipulatorsystems können ihre geplanten Bahnbewegungen weiter ausführen.

### 4. Beschreibung der Figuren

Die im Folgenden beschriebenen Figuren 1-3 zeigen bevorzugte Ausführungsformen der Erfindung. Dabei zeigt
- Fig. 1: ein Manipulatorsystem zur koordinierten Steuerung von zumindest zwei Manipulatoren, umfassend einen Hauptcomputer;
- Fig. 2: ein Manipulatorsystem zur koordinierten Steuerung von zumindest zwei Manipulatoren umfassend eine Hauptsteuerungsvorrichtung und eine Nebensteuerungsvorrichtung, und
- Fig. 3: ein Manipulatorsystem zur koordinierten Steuerung von zumindest zwei Manipulatoren, umfassend zwei nebengeordnete Hauptsteuerungsvorrichtungen und eine Koordinationssteuerungsvorrichtung.

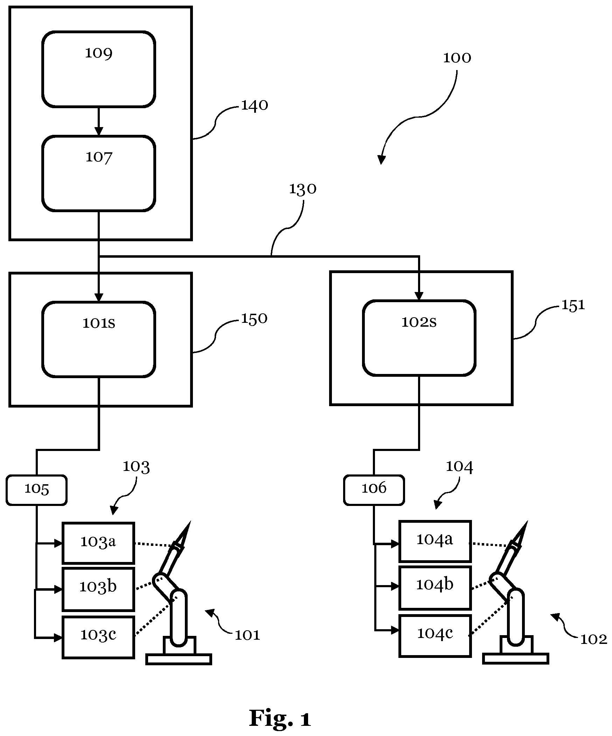

Insbesondere werden in den Figuren 1 bis 3 Systemkomponenten, welche vorzugsweise als Software ausgeführt werden als Rechtecke mit abgerundeten Ecken dargestellt. Systemkomponenten, welche vorzugsweise als Hardware ausgeführt werden, werden als Rechtecke mit spitzen Ecken dargestellt.

Fig. 1 zeigt ein Manipulatorsystem 100, dessen Aufbau im Wesentlichen dem in Anspruch 1 beanspruchten Manipulatorsystem entspricht. Das Manipulatorsystem 100 dient zur koordinierten Steuerung von zumindest zwei Manipulatoren 101, 102. Die gezeigten Manipulatoren 101, 102 sind mehrachsige Manipulatoren, welche zumindest drei Achsen aufweisen. Üblicherweise haben solche mehrachsigen Manipulatoren 101, 102 zumindest sechs Achsen. Aufgrund der schematischen Darstellung von Fig. 1, sind jedoch nicht alle Achsen der Manipulatoren 101, 102 gezeigt.

Jeder Achse eines Manipulators 101, 102 ist ein Aktor (nicht gezeigt) zugeordnet, der mittels eines Umrichters 103a, 103b, 103c, 104a, 104b, 104c angesteuert werden kann. Die Zahl der verwendeten Umrichter ist nicht auf die Zahl der dargestellten Umrichter 103a, 103b, 103c, 104a, 104b, 104c beschränkt, sondern vielmehr ist typischerweise jedem Aktor ein Umrichter zugeordnet. Der einem Aktor zugeordnete Umrichter ist in der Nähe des Aktors angeordnet, in der Art, dass der Umrichter bei einer Bewegung des Manipulators mitbewegt werden kann. Typischerweise werden die Umrichter an den Manipulatorarmen und bevorzugt in den Manipulatorarmen angeordnet. Diese Anordnung wird durch die gepunktete Linie in Fig. 1 schematisch dargestellt. Die Umrichter 103a, 103b, 103c bilden zusammen die Umrichteranordnung 103 des Manipulators 101, und die Umrichter 104a, 104b, 104c bilden zusammen die Umrichteranordnung 104 des Manipulators 102.

Das dargestellte Manipulatorsystem 100 umfasst einen Hauptcomputer 140, welcher dazu eingerichtet ist eine Ablaufsteuerung 109 auszuführen. Die Ablaufsteuerung 109 umfasst geplante Bahnbewegungen der Manipulatoren 101, 102, welche von einem Anwender geplant wurden. Eine vom Hauptcomputer 140 umfasste Befehlsweiche 107 ist dazu eingerichtet, Befehle der Ablaufsteuerung an die Manipulatorsteuerungen 101S, 102S der Manipulatoren 101, 102 zu senden und die Manipulatorsteuerungen 101S, 102S sind dazu eingerichtet, die Befehle der Ablaufsteuerung umfassend die geplanten Bahnbewegungen der Manipulatoren 101, 102, , in Befehle zur Ansteuerung der jeweiligen Achsen der entsprechenden Manipulatoren 101, 102 umzusetzen.

Die Befehle zur Ansteuerung der Achsen werden vom Hauptcomputer 140 über eine Ethernet-basierte Busverbindung 130 an Manipulatorsteuerungen 101S, 102S gesendet und von den Manipulatorsteuerungen 101S, 102S umgewandelt. Die Manipulatorsteuerungen 101S, 102S senden sodann Befehle zur Ansteuerung der Achsen an die zugehörigen Achssteuerungen 105, 106. Die Manipulatorsteuerungen 101S, 102S sind in eigenen Gehäusen 150, 151 räumlich getrennt vom Hauptcomputer 140 eingerichtet. Die Achssteuerungen 105, 106 umfassen typischerweise Hardware und Software und sind bevorzugt in der Nähe des zugehörigen Manipulators angeordnet, besonders bevorzugt in der Art, dass die Achssteuerungen 105, 106 (also die Hardware) bei einer Bewegung des Manipulators 101, 102 mitbewegt werden können. Die Achssteuerungen 105, 106 sind dazu eingerichtet die Befehle zur Ansteuerung der Achsen in Umrichterbefehle umzusetzen.

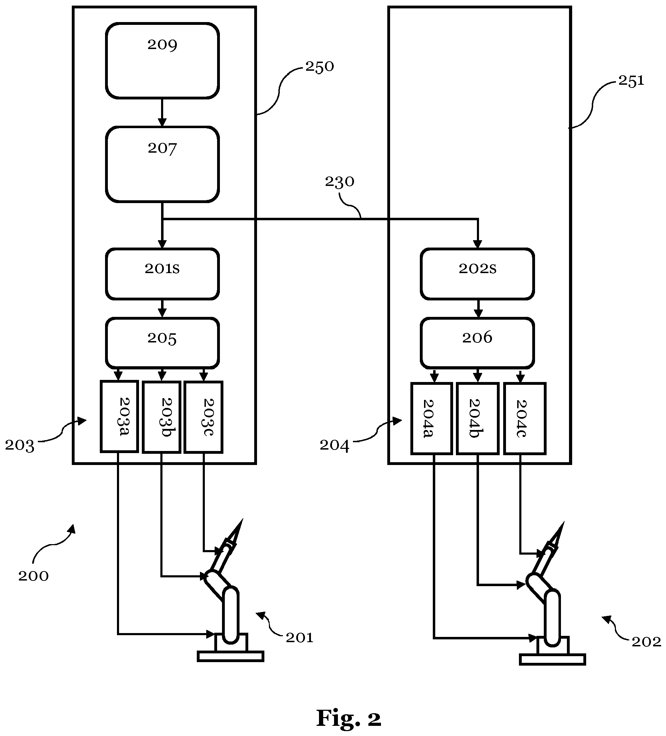

Fig. 2 zeigt ein Manipulatorsystem 200, dessen Aufbau im Wesentlichen dem Manipulatorsystem entspricht, welches in Anspruch 7 beansprucht wird. Das Manipulatorsystem 200 dient zur koordinierten Steuerung von zumindest zwei Manipulatoren 201, 202. Die gezeigten Manipulatoren 201, 202 sind mehrachsige Manipulatoren, welche zumindest drei Achsen aufweisen.

Das dargestellte Manipulatorsystem 200 umfasst eine Hauptsteuerungsvorrichtung 250, die dem Manipulator 201 zugeordnet ist. Weiterhin umfasst das Manipulatorsystem 200 eine Nebensteuerungsvorrichtung 251, die dem Manipulator 202 zugeordnet ist. Die Hauptsteuerungsvorrichtung 250 umfasst eine Ablaufsteuerung 209, eine Befehlsweiche 207 und eine Manipulatorsteuerung 201S sowie zumindest eine Achssteuerung 205 und ist dazu eingerichtet die Ablaufsteuerung 209 auszuführen. Die Befehlsweiche 207 ist dazu eingerichtet, Befehle der Ablaufsteuerung 209 an die Manipulatorsteuerungen 201S und 202S zu senden Die Manipulatorsteuerung 201S sendet Befehle zur Ansteuerung der Achsen des Manipulators 201 an die Achssteuerung 205 und die Manipulatorsteuerung 202S sendet Befehle zur Ansteuerung der Achsen des zweiten Manipulators 202 an die zugehörige Achssteuerung 206.

Die Achssteuerung 205 setzt die Befehle zur Ansteuerung der Achsen in Umrichterbefehle um, welche an die Umrichteranordnung 203 gesendet werden. Die Umrichteranordnung 203 umfasst die Umrichter 203a, 203b, 203c der Aktoren der Achsen des Manipulators 201. Die Zahl der verwendeten Umrichter ist nicht auf die Zahl der dargestellten Umrichter 203a, 203b, 203c beschränkt. Vielmehr ist typischer Weise jedem Aktor des Manipulators ein Umrichter zugeordnet. Bei dieser Variante sind die Umrichter 203a, 203b, 203c bevorzugt zusammen mit der Achssteuerung 205, der Manipulatorsteuerung 201S und der Befehlsweiche 207 im Gehäuse der Hauptsteuerungsvorrichtung 250 angeordnet.

Die Nebensteuerungsvorrichtung 251 ist dem Manipulator 202 zugeordnet. Insbesondere ist die Nebensteuerungsvorrichtung 251 von der Hauptsteuerungsvorrichtung 250 räumlich getrennt und in einem eigenen Gehäuse eingerichtet. Bevorzugt weißt die Nebensteuerungsvorrichtung 251 eine eigenständige Energieversorgung (nicht gezeigt) auf. Somit können die Hauptsteuerungsvorrichtung 250 und die Nebensteuerungsvorrichtung 251 in unmittelbarer Nähe der ihnen zugeordneten Manipulatoren 201, 202 angeordnet werden, und die energieführenden Leitungen von der Hauptsteuerungsvorrichtung 250 und/oder der Nebensteuerungsvorrichtung 251 zu den Manipulatoren 201, 202 entsprechend kurz ausgestaltet sein. Dadurch werden Leitungsverluste vermieden.

Die Nebensteuerungsvorrichtung 251 umfasst eine Manipulatorsteuerung 202s, eine Achssteuerung 206, wobei die Befehlsweiche 207 der Hauptsteuerungsvorrichtung 250 Befehle der Ablaufsteuerung 209 an die Manipulatorsteuerung 202S sendet. Die Manipulatorsteuerung 202S sendet Befehle zur Ansteuerung der Achsen des Manipulators 202 an die Achssteuerung 206. Die Achssteuerung 206 setzt die Befehle zur Ansteuerung der Achsen in Umrichterbefehle um, welche an die Umrichteranordnung 204 gesendet werden. Die Umrichteranordnung 204 umfasst die Umrichter 204a, 204b, 204c der Aktoren der Achsen des Manipulators 202. Bevorzugt sind die Umrichter 204a, 204b, 204c zusammen mit der Manipulatorsteuerung 202S und der Achssteuerung 206 im Gehäuse der Nebensteuerungsvorrichtung 251 angeordnet.

Die Nebensteuerungsvorrichtung 251 ist der Hauptsteuerungsvorrichtung 250 über eine Ethernet-basierte Busverbindung 230 zugeordnet. Die Koordination der geplanten Bahnbewegungen der Manipulatoren 201, 202 erfolgt in der Befehlsweiche 207. Die Befehle der Ablaufsteuerung 209 werden über die Ethernet-basierte Busverbindung 230 von der Befehlsweiche 207 an die Manipulatorsteuerung 202S übermittelt.

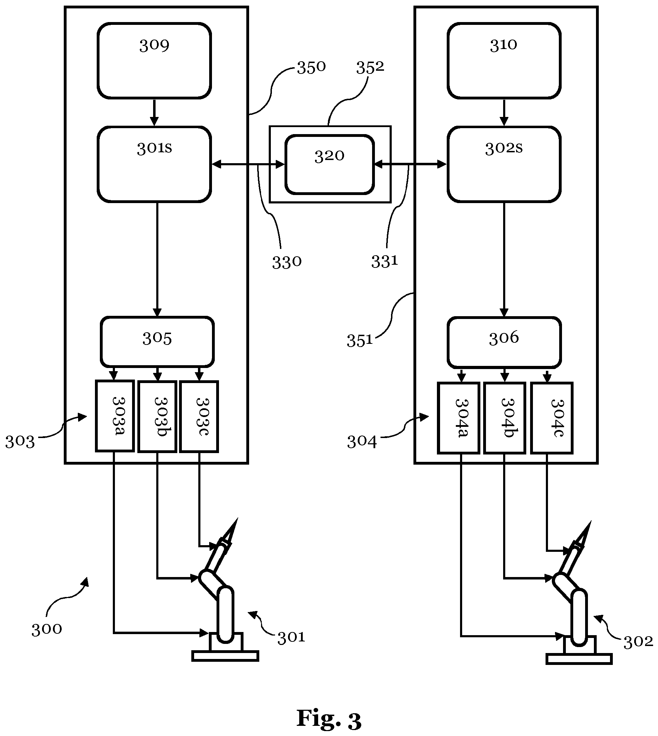

Fig. 3 zeigt ein Manipulatorsystem 300, dessen Aufbau im Wesentlichen dem Manipulatorsystem, welches in Anspruch 10 beansprucht wird entspricht. Das Manipulatorsystem 300 dient zur koordinierten Steuerung von zumindest zwei Manipulatoren 301, 302.

Das dargestellte Manipulatorsystem 300 umfasst zwei nebengeordnete Hauptsteuerungsvorrichtungen 350, 351, welche mittels einer Koordinationssteuerungsvorrichtung 320 über eine Ethernet-basierte Busverbindung 330, 331 einander zugeordnet sind. Der nebengeordneten Hauptsteuerungsvorrichtung 350 ist der Manipulator 301 zugeordnet und der nebengeordneten Hauptsteuerungsvorrichtung 351 ist der Manipulator 302 zugeordnet. Dabei führt jede der nebengeordneten Hauptsteuerungsvorrichtungen 350, 351 eine, den Manipulatoren 301, 302 zugeordnete Ablaufsteuerung 309, 310 aus.

Die Ablaufsteuerung 309 umfasst geplante Bahnbewegungen des Manipulators 301 und die Ablaufsteuerung 310 umfasst geplante Bahnbewegung des Manipulators 302. Jede der Hauptsteuerungsvorrichtungen 350, 351 umfasst eine eigene Manipulatorsteuerung 301s, 302s und eine eigene Achssteuerung 305, 306. Die Manipulatorsteuerungen 301s, 302s senden Befehle zur Ansteuerung der Achsen an die Achssteuerungen 305, 306. Die Achssteuerungen 305, 306 setzen die empfangenen Befehle zur Ansteuerung der Achsen in Umrichterbefehle um, welche an die jeweiligen Umrichteranordnungen 303, 304 gesendet werden. Die Umrichteranordnungen 303, 304 umfassen die Umrichter 303a, 303b, 303c bzw. die Umrichter 304a, 304b, 304c der Aktoren der Manipulatoren 301, 302. Vorzugsweise sind die Umrichter 303a, 303b, 303c bzw. 304a, 304b, 304c zusammen mit den Achssteuerungen 305, 306 in dem jeweiligen Gehäuse der nebengeordneten Hauptsteuerungsvorrichtungen 350, 351 angeordnet.

Die nebengeordneten Hauptsteuerungsvorrichtungen 350, 351 sind voneinander räumlich getrennt, vorzugsweise in unmittelbarer Nähe der ihnen zugeordneten Manipulatoren 301, 302, in jeweils einem eigenen Gehäuse eingerichtet und weisen eine eigenständige Energieversorgung (nicht dargestellt) auf. Die nebengeordneten Hauptsteuerungsvorrichtungen 350, 351 und insbesondere die Manipulatorsteuerungen 301s, 302s führen die Ablaufsteuerungen 309, 310 der Manipulatoren 301, 302 aus. Dadurch steht jedem der Manipulatoren 301, 302 eine eigenständige Manipulatorsteuerungsvorrichtung (Hauptsteuerungsvorrichtung) zur Verfügung.

Zur Koordination der geplanten Bahnbewegungen der Manipulatoren 301, 302 werden die nebengeordneten Hauptsteuerungsvorrichtungen 350, 351 mittels einer Koordinationssteuerungsvorrichtung 320 über eine Ethernet-basierte Busverbindung 330, 331 miteinander verbunden. Auch die Koordinationssteuerungsvorrichtung 320 ist in einem eigenen Gehäuse 352, räumlich getrennt von den nebengeordneten Hauptsteuerungsvorrichtungen 350, 351 angeordnet und weist eine eigenständige Energieversorgung (nicht gezeigt) auf. Die Koordinationssteuerungsvorrichtung 320 koordiniert die Manipulatoren 301, 302 in der Art, dass der Programmablauf der Ablaufsteuerungen 309, 310 in einer bestimmten Weise erfolgt. Dies kann ein vorher bestimmter zeitlicher Ablauf sein oder auf Bewegungsbedingungen der Manipulatorbewegungen, wie oben beschrieben beruhen. Ebenso kann die Koordinationssteuerungsvorrichtung 320 in die Ablaufsteuerungen 309, 310 wie bereits beschrieben eingreifen.

Allen gezeigten Manipulatorsystemen 100, 200, 300 ist gemein, dass durch die beschriebene Anordnung der einzelnen Komponenten der Manipulatorsysteme 100; 200; 300 es möglich ist, die Manipulatorsysteme einfach durch weitere Manipulatoren (nicht gezeigt) zu erweitern. Die zusätzlichen Manipulatoren werden bevorzugt basierend auf einer Sterntopologie oder basierend auf einer Kettentopologie in das bestehende Manipulatorsystem eingebunden. Weiterhin ermöglicht die Anordnung der Komponenten in eigenständigen Gehäusen eine beliebige räumliche Anordnung der Komponenten und somit eine Reduzierung der benötigten energieführenden Leitungslänge. Dies resultiert in einem robusten Manipulatorsystem, welches weniger anfällig ist für Störungen und eine geringere Leitungsverluste aufweist.

### Bezugszeichenliste:

- 100; 200; 300: Manipulatorsysteme
- 101, 102; 201, 202; 301, 302: Mehrachsige Manipulatoren
- 103, 104; 203, 204; 303, 304: Umrichteranordnungen
- 103a-c, 104a-c; 203a-c, 204a-c; 303a-c, 304a-c: Umrichter
- 105, 106; 205, 206; 305, 306: Achssteuerungen
- 107; 207;: Befehlsweichen
- 101s; 102s; 201s; 202s; 301s; 302s: Manipulatorsteuerungen
- 109; 209; 309, 310: Ablaufsteuerungen
- 130; 230; 330, 331: Ethernet-basierte Busverbindungen
- 140: Hauptcomputer
- 150, 151: Gehäuse der Manipulatorsteuerungen 101S, 102S
- 250: Hauptsteuerungsvorrichtung
- 251: Nebensteuerungsvorrichtung
- 320: Koordinationssteuerungsvorrichtung
- 352: Gehäuse der Koordinationssteuerungsvorrichtung
- 350, 351: nebengeordnete Hauptsteuerungsvorrichtungen

## Patentansprüche

1. Manipulatorsystem (100) zur koordinierten Steuerung von zumindest zwei Manipulatoren (101, 102), umfassend:
einen Hauptcomputer (140), der dazu eingerichtet ist, eine Ablaufsteuerung (109) auszuführen,
zumindest zwei mehrachsige Manipulatoren (101, 102), wobei jedem Manipulator eine Manipulatorsteuerung (101s, 102s) zugeordnet ist, welche Manipulatorsteuerungen (101s, 102s) vom Hauptcomputer (140) räumlich getrennt, in jeweils einem eigenen Gehäuse (150, 151) eingerichtet sind, und wobei
jeder Manipulator (101, 102) Umrichter (103a, 103b, 103c, 104a, 104b, 104c) zum Ansteuern der Aktoren der Achsen des jeweiligen Manipulators (101, 102) umfasst, wobei
der einem Aktor zugeordnete Umrichter (103a, 103b, 103c, 104a, 104b, 104c) in der Nähe des Aktors angeordnet ist, in der Art, dass der Umrichter (103a, 103b, 103c, 104a, 104b, 104c) bei einer Bewegung des Manipulators (101, 102) mitbewegt werden kann,
**dadurch gekennzeichnet, dass**
jedem Manipulator zumindest eine Achssteuerung (105, 106) zugeordnet ist, und wobei die zumindest eine Achssteuerung (105, 106) in der Art am jeweiligen Manipulator (101, 102) angeordnet ist, dass die zumindest eine Achssteuerung (105, 106) bei einer Bewegung des Manipulators (101, 102) mitbewegt werden kann.

2. Manipulatorsystem (100) zur koordinierten Steuerung von zumindest zwei Manipulatoren (101, 102) nach Anspruch 1, wobei der einem Aktor zugeordnete Umrichter (103a, 103b, 103c, 104a, 104b, 104c) in einem Manipulatorarm angeordnet ist.

3. Manipulatorsystem (100) zur koordinierten Steuerung von zumindest zwei Manipulatoren (101, 102) nach einem der vorhergehenden Ansprüche, wobei die zumindest zwei Manipulatorsteuerungen (101s, 102s) dem Hauptcomputer (140) in einer Kettentopologie oder in einer Sterntopologie zugeordnet sind.

4. Manipulatorsystem (100) nach einem der vorhergehenden Ansprüche, wobei die Ablaufsteuerung (109) geplante Bahnbewegungen der zumindest zwei Manipulatoren (101, 102) umfasst, und der Hauptcomputer (140) eine Befehlsweiche (107) umfasst, welche dazu eingerichtet ist geplante Bahnbewegungen der zumindest zwei Manipulatoren (101, 102) zu koordinieren.

5. Manipulatorsystem (100) nach einem der vorhergehenden Ansprüche, wobei der Hauptcomputer (140) dazu eingerichtet ist, Befehle der Ablaufsteuerung (109) an die Manipulatorsteuerungen (101s, 102s) zu senden, und wobei jedem Manipulator zumindest eine Achssteuerung (105, 106) zugeordnet ist und
die jeweilige Manipulatorsteuerung (101s, 102s) dazu eingerichtet ist, Befehle zur Ansteuerung der Achsen des zugeordneten Manipulators (101, 102) an die zumindest eine Achssteuerung (105, 106) zu senden, und wobei
die Achssteuerungen (105, 106) dazu eingerichtet sind Befehle zur Ansteuerung der Achsen in Umrichterbefehle umzusetzen.

6. Manipulatorsystem (200) zur koordinierten Steuerung von zumindest zwei Manipulatoren (201, 202), umfassend
eine Hauptsteuerungsvorrichtung (250), die einem ersten (201) der zumindest zwei Manipulatoren (201, 202) zugeordnet ist, und die dazu eingerichtet ist, eine Ablaufsteuerung (209) auszuführen, wobei
die Hauptsteuerungsvorrichtung (250) eine Befehlsweiche (207), eine erste Manipulatorsteuerung (201s) und eine erste Achssteuerung (205) umfasst; und wobei die Befehlsweiche (207) dazu eingerichtet ist, Befehle der Ablaufsteuerung (209) an die erste Manipulatorsteuerung (201s) zu senden, und wobei
die erste Manipulatorsteuerung (201s) dazu eingerichtet ist, um Befehle zur Ansteuerung der Achsen des ersten Manipulators (201) an die erste Achssteuerung (205) zu senden, und die erste Achssteuerung (205) dazu eingerichtet ist, Befehle zur Ansteuerung der Achsen in Umrichterbefehle umzusetzen, sowie
zumindest eine Nebensteuerungsvorrichtung (251), die dem zweiten (202) der zumindest zwei Manipulatoren (201, 202) zugeordnet ist, und welche zumindest eine Nebensteuerungsvorrichtung (251) von der Hauptsteuerungsvorrichtung (250) räumlich getrennt, in einem eigenen Gehäuse eingerichtet ist und eine eigenständige Energieversorgung aufweist, wobei die
zumindest eine Nebensteuerungsvorrichtung (251) eine zweite Manipulatorsteuerung (202s) umfasst, und wobei
die Befehlsweiche (207) der Hauptsteuerungsvorrichtung (250) derart eingerichtet ist, um Befehle der Ablaufsteuerung (209) an die zweite Manipulatorsteuerung (202s) zu senden, wobei die zweite Manipulatorsteuerung (202s) dazu eingerichtet ist Befehle zur Ansteuerung der Achsen des zweiten Manipulators (202) an die Achssteuerung (206) des zweiten Manipulators zu senden, und diese Achssteuerung (206) dazu eingerichtet ist, Befehle zur Ansteuerung der Achsen in Umrichterbefehle umzusetzen, **dadurch gekennzeichnet, dass**
jeder Manipulator (201, 202; 301, 302) Umrichter (203a, 203b, 203c, 204a, 204b, 204c; 303a, 303b, 303c, 304a, 304b, 304c) zum Ansteuern der Aktoren der Achsen des Manipulators umfasst, und wobei der, einem Aktor zugeordnete Umrichter (203a, 203b, 203c, 204a, 204b, 204c; 303a, 303b, 303c, 304a, 304b, 304c) in der Nähe des Aktors eingerichtet ist, in der Art, dass der Umrichter (203a, 203b, 203c, 204a, 204b, 204c; 303a, 303b, 303c, 304a, 304b, 304c) bei einer Bewegung des Manipulators (201, 202; 301, 302) mitbewegt werden kann, und wobei
jedem Manipulator zumindest eine Achssteuerung (205, 206, 305, 306) zugeordnet ist, wobei die zumindest eine Achssteuerung (205, 206, 305, 306) in der Art am Manipulator (201, 202; 301, 302) angeordnet ist, dass die zumindest eine Achssteuerung (205, 206, 305, 306) bei einer Bewegung des Manipulators (201, 202; 301, 302) mitbewegt werden kann.

7. Manipulatorsystem (200) zur koordinierten Steuerung von zumindest zwei Manipulatoren (201, 202) nach Anspruch 6, wobei das Manipulatorsystem einen dritten Manipulator mit einer dritten Nebensteuerungsvorrichtungen umfasst, und die Nebensteuerungsvorrichtungen (251) der Hauptsteuerungsvorrichtung (250) in einer Kettentopologie oder in einer Sterntopologie zugeordnet sind, und wobei die Ablaufsteuerung (209) vorzugsweise geplante Bahnbewegungen der zumindest zwei Manipulatoren (201, 202) umfasst.

8. Manipulatorsystem (300) zur koordinierten Steuerung von zumindest zwei Manipulatoren (301, 302), umfassend
zumindest zwei nebengeordnete Hauptsteuerungsvorrichtungen (350, 351), wobei jeder Hauptsteuerungsvorrichtung (350, 351) einer der zumindest zwei Manipulatoren (301, 302) zugeordnet ist, und jede Hauptsteuerungsvorrichtung (350, 351) dazu eingerichtet ist, eine Ablaufsteuerung (309, 310) des der Hauptsteuerungsvorrichtung (350, 351) zugeordneten Manipulators (301, 302) auszuführen, wobei jede der Hauptsteuerungsvorrichtungen (350, 351) eine Manipulatorsteuerung (301s, 302s) und eine Achssteuerung (305, 306) umfasst, und wobei die Manipulatorsteuerungen (301s, 302s) dazu eingerichtet sind, um Befehle zur Ansteuerung der Achsen des der Hauptsteuerungsvorrichtung (350, 351) zugeordneten Manipulators an die jeweilige Achssteuerung (305, 306) zu senden, und die jeweilige Achssteuerung (305, 306) dazu eingerichtet ist, Befehle zur Ansteuerung der Achsen in Umrichterbefehle umzusetzen, wobei die nebengeordneten Hauptsteuerungsvorrichtungen (350, 351) voneinander räumlich getrennt, in jeweils einem eigenen Gehäuse eingerichtet sind und jeweils eine eigenständige Energieversorgung aufweisen,
sowie eine Koordinationssteuerungsvorrichtung (320), welche von den nebengeordneten Hauptsteuerungsvorrichtungen (350, 351) räumlich getrennt, in einem eigenen Gehäuse eingerichtet ist und eine eigenständige Energieversorgung aufweist, wobei die Koordinationssteuerungsvorrichtung (320) dazu eingerichtet ist, die Ablaufsteuerungen (309, 310) der zumindest zwei Manipulatoren (301, 302) derart zu koordinieren, dass der Programmablauf der Ablaufsteuerungen (309, 310) in einer vorherbestimmten Weise erfolgt, **dadurch gekennzeichnet, dass**
jeder Manipulator (201, 202; 301, 302) Umrichter (203a, 203b, 203c, 204a, 204b, 204c; 303a, 303b, 303c, 304a, 304b, 304c) zum Ansteuern der Aktoren der Achsen des Manipulators umfasst, und wobei der, einem Aktor zugeordnete Umrichter (203a, 203b, 203c, 204a, 204b, 204c; 303a, 303b, 303c, 304a, 304b, 304c) in der Nähe des Aktors eingerichtet ist, in der Art, dass der Umrichter (203a, 203b, 203c, 204a, 204b, 204c; 303a, 303b, 303c, 304a, 304b, 304c) bei einer Bewegung des Manipulators (201, 202; 301, 302) mitbewegt werden kann, und wobei
jedem Manipulator zumindest eine Achssteuerung (205, 206, 305, 306) zugeordnet ist, wobei die zumindest eine Achssteuerung (205, 206, 305, 306) in der Art am Manipulator (201, 202; 301, 302) angeordnet ist, dass die zumindest eine Achssteuerung (205, 206, 305, 306) bei einer Bewegung des Manipulators (201, 202; 301, 302) mitbewegt werden kann.

9. Manipulatorsystem (300) zur koordinierten Steuerung von zumindest zwei Manipulatoren (301, 302) nach Anspruch 8, wobei die nebengeordneten Hauptsteuerungsvorrichtungen (350, 351) der Koordinationssteuerungsvorrichtung (320) in einer Kettentopologie oder in einer Sterntopologie zugeordnet sind, wobei
jede Ablaufsteuerung (309, 310) vorzugsweise geplante Bahnbewegungen des Manipulators umfasst, welcher der Hauptsteuerungsvorrichtung (350, 351) des Manipulatorsteuerungsprogramms (309, 310) zugeordnet ist.

10. Manipulatorsystem (200; 300) nach einem der Ansprüche 6 bis 9, wobei jedem Manipulator (201, 202; 301, 302) Umrichter (203a, 203b, 203c, 204a, 204b, 204c; 303a, 303b, 303c, 304a, 304b, 304c) zum Ansteuern der Aktoren der Achsen des Manipulators (201, 202; 301, 302) zugeordnet sind, und wobei die Umrichter (203a, 203b, 203c, 204a, 204b, 204c; 303a, 303b, 303c, 304a, 304b, 304c) in dem Gehäuse der Hauptsteuerungsvorrichtung (250; 350, 351) und/oder Nebensteuerungsvorrichtung (251), welcher der Manipulator (201, 202; 301, 302) zugeordnet ist eingerichtet sind.

11. Manipulatorsystem (100; 200; 300) nach einem der vorhergehenden Ansprüche, wobei zumindest ein Manipulator (101, 102; 201, 202; 301, 302) ein Industrieroboter ist, und der zumindest zweite Manipulator an einer Achse des Industrieroboters eingerichtet ist.

12. Manipulatorsystem (100; 200; 300) nach einem der vorhergehenden Ansprüche, wobei das Manipulatorsystem (100; 200; 300) in der Art eingerichtet ist, dass die Koordination der geplanten Bahnbewegungen der Manipulatoren (101, 102; 201, 202; 301, 302) über eine Ethernet-basierte Busverbindung (130; 230; 330, 331) erfolgt.

13. Manipulatorsystem (100; 200; 300) nach einem der vorhergehenden Ansprüche, wobei das Manipulatorsystem (100; 200; 300) in der Art eingerichtet ist, dass die Koordination der geplanten Bahnbewegungen der Manipulatoren (101, 102; 201, 202; 301, 302) mittels einer Echtzeitsynchronisation durchgeführt wird.

14. Manipulatorsystem (100; 200; 300) nach einem der vorhergehenden Ansprüche, wobei die Achssteuerung (105, 106; 205, 206; 305, 306) eine intelligente Achssteuerung ist, und die intelligente Achssteuerung eine Achswinkelsteuerung der einzelnen Achsen des Manipulators (101, 102; 201, 202; 301, 302) und eine übergeordnete kartesische Steuerung umfasst.

15. Manipulatorsystem (100; 200; 300) nach einem der vorhergehenden Ansprüche 1 bis 5, 8 oder 9, wobei ein zumindest zweiter Manipulator (101, 102; 201, 202; 301, 302) unabhängig von einer Störung eines ersten Manipulators (101, 102; 201, 202; 301, 302) angesteuert werden kann und sich entsprechend der Ansteuerung verhält.

## Claims

1. A manipulator system (100) for coordinated control of at least two manipulators (101, 102), comprising:
a main computer (140) configured to execute a sequence controller (109),
at least two multi-axis manipulators (101, 102), wherein each manipulator is associated with a manipulator controller (101s, 102s), which manipulator controllers (101s, 102s) are spatially separated from the main computer (140), each being configured in its own housing (150, 151), and wherein
each manipulator (101, 102) comprises converters (103a, 103b, 103c, 104a, 104b, 104c) for controlling the actuators of the axes of the respective manipulator (101, 102), wherein
the inverter (103a, 103b, 103c, 104a, 104b, 104c) associated with an actuator is arranged in the vicinity of the actuator, in such a way that the inverter (103a, 103b, 103c, 104a, 104b, 104c) can be moved along with a movement of the manipulator (101, 102), **characterized in that**
each manipulator is associated with at least one axis controller (105, 106), and wherein the at least one axis controller (105, 106) is arranged on the respective manipulator (101, 102) in such a way that the at least one axis controller (105, 106) can be moved along with a movement of the manipulator (101, 102).

2. The manipulator system (100) for coordinated control of at least two manipulators (101, 102) according to claim 1, wherein the inverter (103a, 103b, 103c, 104a, 104b, 104c) associated with an actuator is arranged in a manipulator arm.

3. The manipulator system (100) for coordinated control of at least two manipulators (101, 102) according to any one of the preceding claims, wherein the at least two manipulator controllers (101s, 102s) are associated with the main computer (140) in a chain topology or in a star topology.

4. The manipulator system (100) according to any one of the preceding claims, wherein the sequence controller (109) comprises scheduled path movements of the at least two manipulators (101, 102), and the main computer (140) comprises a command switch (107) that is configured to coordinate scheduled path movements of the at least two manipulators (101, 102).

5. The manipulator system (100) according to any one of the preceding claims, wherein the main computer (140) is configured to send commands of the sequence controller (109) to the manipulator controllers (101s, 102s), and wherein each manipulator is associated with at least one axis controller (105, 106), and
the respective manipulator controller (101s, 102s) is configured to send commands for controlling the axes of the associated manipulator (101, 102) to the at least one axis controller (105, 106), and wherein
the axis controllers (105, 106) are configured to convert commands for controlling the axes into inverter commands.

6. A manipulator system (200) for coordinated control of at least two manipulators (201, 202), comprising
a main control device (250) associated with a first (201) of the at least two manipulators (201, 202) and configured to execute a sequence controller (209), wherein
the main control device (250) comprises a command switch (207), a first manipulator controller (201s), and a first axis controller (205); and wherein the command switch (207) is configured to send commands of the sequence controller (209) to the first manipulator controller (201s), and wherein
the first manipulator controller (201s) is configured to send commands for controlling the axes of the first manipulator (201) to the first axis controller (205), and the first axis controller (205) is configured to convert commands for controlling the axes into inverter commands, and
at least one auxiliary control device (251), which is associated with the second (202) of the at least two manipulators (201, 202), and which at least one auxiliary control device (251) is spatially separated from the main control device (250), is configured in its own housing and has an independent power supply, wherein the
at least one auxiliary control device (251) comprises a second manipulator controller (202s), and wherein
the command switch (207) of the main control device (250) is configured to send commands of the sequence controller (209) to the second manipulator controller (202s), wherein the second manipulator controller (202s) is configured to send commands for controlling the axes of the second manipulator (202) to the axis controller (206) of the second manipulator, and this axis controller (206) being configured to convert commands for controlling the axes into inverter commands, **characterized in that**
each manipulator (201, 202; 301, 302) comprises inverters (203a, 203b, 203c, 204a, 204b, 204c; 303a, 303b, 303c, 304a, 304b, 304c) for controlling the actuators of the axes of the manipulator, and wherein the inverter (203a, 203b, 203c, 204a, 204b, 204c; 303a, 303b, 303c, 304a, 304b, 304c) associated with an actuator is arranged in the vicinity of the actuator, in such a way that the inverter (203a, 203b, 203c, 204a, 204b, 204c; 303a, 303b, 303c, 304a, 304b, 304c) can be moved along with a movement of the manipulator (201, 202; 301, 302), and wherein
at least one axis controller (205, 206, 305, 306) is associated with each manipulator, wherein the at least one axis controller (205, 206, 305, 306) is arranged on the manipulator (201, 202; 301, 302) in such a way that the at least one axis controller (205, 206, 305, 306) can be moved along with a movement of the manipulator (201, 202; 301, 302).

7. The manipulator system (200) for coordinated control of at least two manipulators (201, 202) according to claim 6, wherein the manipulator system comprises a third manipulator with a third auxiliary control device, and the auxiliary control devices (251) are associated with the main control device (250) in a chain topology or in a star topology, and wherein the sequence control (209) preferably comprises planned path movements of the at least two manipulators (201, 202).

8. A manipulator system (300) for coordinated control of at least two manipulators (301, 302), comprising
at least two auxiliary main control devices (350, 351), wherein each main control device (350, 351) is associated with one of the at least two manipulators (301, 302), and each main control device (350, 351) is configured to perform a sequence control (309, 310) of the manipulator (301, 302) associated with the main control device (350, 351), wherein each of the main control devices (350, 351) comprises a manipulator controller (301s, 302s) and an axis controller (305, 306), and wherein the manipulator controllers (301s, 302s) are configured to send commands for controlling the axes of the manipulator associated with the main control device (350, 351) to the respective axis controller (305, 306), and the respective axis controller (305, 306) is configured to convert commands for controlling the axes into inverter commands, wherein the auxiliary main control devices (350, 351) are configured spatially separated from one another, each in its own housing, and each has an independent power supply
as well as a coordination control device (320), which is configured spatially separated from the auxiliary main control devices (350, 351), in its own housing and has an independent power supply, wherein the coordination control device (320) is configured to coordinate the sequence controllers (309, 310) of the at least two manipulators (301, 302) in such a way that the program sequence of the sequence controllers (309, 310) takes place in a predetermined manner, **characterized in that**
each manipulator (201, 202; 301, 302) comprises converters (203a, 203b, 203c, 204a, 204b, 204c; 303a, 303b, 303c, 304a, 304b, 304c) for controlling the actuators of the axes of the manipulator, and wherein the converter (203a, 203b, 203c, 204a, 204b, 204c; 303a, 303b, 303c, 304a, 304b, 304c) associated with an actuator is arranged in the vicinity of the actuator, in such a way that the inverter (203a, 203b, 203c, 204a, 204b, 204c; 303a, 303b, 303c, 304a, 304b, 304c) can be moved along with a movement of the manipulator (201, 202; 301, 302), and wherein
at least one axis controller (205, 206, 305, 306) is associated with each manipulator, wherein the at least one axis controller (205, 206, 305, 306) is arranged on the manipulator (201, 202; 301, 302) in such a way that the at least one axis controller (205, 206, 305, 306) can be moved along with a movement of the manipulator (201, 202; 301, 302).

9. The manipulator system (300) for coordinated control of at least two manipulators (301, 302) according to claim 8, wherein the auxiliary main control devices (350, 351) are associated with the coordination control device (320) in a chain topology or in a star topology, wherein
each sequence controller (309, 310) preferably comprises planned path movements of the manipulator which is associated with the main control device (350, 351) of the manipulator control program (309, 310).

10. The manipulator system (200; 300) according to any one of claims 6 to 9, wherein each manipulator (201, 202; 301, 302) is associated with inverters (203a, 203b, 203C, 204a, 204b, 204c; 303a, 303b, 303c, 304a, 304b, 304c) for controlling the actuators of the axes of the manipulator (201, 202; 301, 302), and wherein the converters (203a, 203b, 203C, 204a, 204b, 204c; 303a, 303b, 303c, 304a, 304b, 304c) are configured in the housing of the main control device (250; 350, 351) and/or auxiliary control device (251) with which the manipulator (201, 202; 301, 302) is associated.

11. The manipulator system (100; 200; 300) according to any one of the preceding claims, wherein at least one manipulator (101, 102; 201, 202; 301, 302) is an industrial robot, and the at least second manipulator is configured on an axis of the industrial robot.

12. The manipulator system (100; 200; 300) according to any one of the preceding claims, wherein the manipulator system (100; 200; 300) is configured in such a way that the coordination of the planned path movements of the manipulators (101, 102; 201, 202; 301, 302) is performed via an Ethernet-based bus connection (130; 230; 330, 331).

13. The manipulator system (100; 200; 300) according to any one of the preceding claims, wherein the manipulator system (100; 200; 300) is configured in such a way that the coordination of the planned path movements of the manipulators (101, 102; 201, 202; 301, 302) is performed by means of a real-time synchronization.

14. The manipulator system (100; 200; 300) according to any one of the preceding claims, wherein the axis controller (105, 106; 205, 206; 305, 306) is an intelligent axis controller, and the intelligent axis controller comprises an axis angle controller of the individual axes of the manipulator (101, 102; 201, 202; 301,302) and a superordinate Cartesian controller.

15. The manipulator system (100; 200; 300) according to any of the preceding claims 1 to 5, 8 or 9, wherein an at least second manipulator (101, 102; 201, 202; 301, 302) can be controlled independently of a disturbance of a first manipulator (101, 102; 201, 202; 301, 302) and behaves according to the control.

## Revendications

1. Système de manipulateur (100) pour la commande coordonnée d'au moins deux manipulateurs (101, 102), comprenant :
un ordinateur principal (140) qui est agencé pour exécuter une commande de déroulement (109),
au moins deux manipulateurs multiaxe (101, 102), dans lequel une commande de manipulateur (101S, 102S) est associée à chaque manipulateur, lesquelles commandes de manipulateur (101S, 102S) sont séparées spatialement de l'ordinateur principal (140), sont agencées dans respectivement un boîtier propre (150, 151), et dans lequel
chaque manipulateur (101, 102) inclut des convertisseurs (103a, 103b, 103c, 104a, 104b, 104c) pour commander les actionneurs des axes du manipulateur respectif (101, 102), le convertisseur (103a, 103b, 103c, 104a, 104b, 104c) associé à un actionneur est disposé à proximité de l'actionneur, de façon qu'en cas de déplacement du manipulateur (101, 102), le convertisseur (103a, 103b, 103c, 104a, 104b, 104c) soit déplacé avec lui, **caractérisé en ce que**
au moins une commande d'axe (105, 106) est associée à chaque manipulateur, et dans lequel la au moins une commande d'axe (105, 106) est disposée sur le manipulateur respectif (101, 102), de façon qu'en cas de déplacement du manipulateur (101, 102), la au moins une commande d'axe (105, 106) puisse être déplacée avec lui.

2. Système de manipulateur (100) pour la commande coordonnée d'au moins deux manipulateurs (101, 102) selon la revendication 1, dans lequel le convertisseur (103a, 103b, 103c, 104a, 104b, 104c) associé à un actionneur est disposé dans un bras de manipulateur.

3. Système de manipulateur (100) pour la commande coordonnée d'au moins deux manipulateurs (101, 102) selon une des revendications précédentes, dans lequel les au moins deux commandes de manipulateur (101S, 102S) sont associées à l'ordinateur principal (140) dans une topologie en chaîne ou dans une topologie en étoile.

4. Système de manipulateur (100) selon une des revendications précédentes, dans lequel la commande de déroulement (109) inclut des déplacements sur trajectoire planifiés des au moins deux manipulateurs (101, 102), et l'ordinateur principal (140) inclut un aiguillage d'instructions (107) qui est agencé pour coordonner des déplacements sur trajectoire planifiés des au moins deux manipulateurs (101, 102).

5. Système de manipulateur (100) selon une des revendications précédentes, dans lequel l'ordinateur principal (140) est agencé pour envoyer des instructions de la commande de déroulement (109) aux commandes de manipulateur (101S, 102S), et au moins une commande d'axe (105, 106) est associée à chaque manipulateur, et dans lequel
la commande de manipulateur respective (101S, 102S) est agencée pour envoyer à la au moins une commande d'axe (105, 106) des instructions pour commander les axes du manipulateur associé (101, 102), et dans lequel les commandes d'axe (105, 106) sont agencées pour convertir des instructions de commande des axes en instructions de convertisseurs.

6. Système de manipulateur (200) pour la commande coordonnée d'au moins deux manipulateurs (201, 202), comprenant
un dispositif de commande principal (250) qui est associé à un premier (201) des au moins deux manipulateurs (201, 202) et qui est agencé pour exécuter une commande de déroulement (209), dans lequel
le dispositif de commande principal (250) inclut un aiguillage d'instructions (207), une première commande de manipulateur (201S) et une première commande d'axe (205) ; et dans lequel l'aiguillage d'instructions (207) est agencé pour envoyer des instructions de la commande de déroulement (209) à la première commande de manipulateur (201S), et dans lequel
la première commande de manipulateur (201S) est agencée pour envoyer des instructions de commande des axes du premier manipulateur (201) à la première commande d'axe (205), et la première commande d'axe (205) étant agencée pour convertir des instructions de commande des axes en instructions de convertisseurs, ainsi que
au moins un dispositif de commande annexe (251) qui est associé au second (202) des au moins deux manipulateurs (201, 202), et ledit au moins un dispositif de commande annexe (251) étant agencé dans un boîtier propre en étant séparé spatialement du dispositif de commande principal (250) et comportant une alimentation énergétique autonome, dans lequel le
au moins un dispositif de commande annexe (251) inclut une seconde commande de manipulateur (202S), et dans lequel l'aiguillage d'instructions (207) du dispositif de commande principal (250) est agencé pour envoyer des instructions de la commande de déroulement (209) à la seconde commande de manipulateur (202S), la seconde commande de manipulateur (202S) étant agencée pour envoyer des instructions de commande des axes du second manipulateur (202) à la commande d'axe (206) du second manipulateur, et cette commande d'axe (206) étant agencée pour convertir des instructions de commande des axes en instructions de convertisseurs, **caractérisé en ce que**
chaque manipulateur (201, 202 ; 301, 302) inclut des convertisseurs (203a, 203b, 203c, 204a, 204b, 204c ; 303a, 303b, 303c, 304a, 304b, 304c) pour commander les actionneurs des axes du manipulateur, et le convertisseur (203a, 203b, 203c, 204a, 204b, 204c ; 303a, 303b, 303c, 304a, 304b, 304c) associé à un actionneur étant agencé à proximité de l'actionneur, de façon qu'en cas de déplacement du manipulateur (201, 202 ; 301, 302), le convertisseur (203a, 203b, 203c, 204a, 204b, 204c ; 303a, 303b, 303c, 304a, 304b, 304c) puisse être déplacé avec lui, et dans lequel au moins une commande d'axe (205, 206, 305, 306) est associée à chaque manipulateur, dans lequel la au moins une commande d'axe (205, 206, 305, 306) est disposée sur le manipulateur (201, 202 ; 301, 302) de façon qu'en cas de déplacement du manipulateur (201, 202 ; 301, 302), la au moins une commande d'axe (205, 206, 305, 306) puisse être déplacée avec lui.

7. Système de manipulateur (200) pour la commande coordonnée d'au moins deux manipulateurs (201, 202) selon la revendication 6, dans lequel le système de manipulateur inclut un troisième manipulateur avec un troisième dispositif de commande annexe, et les dispositifs de commande annexes (251) sont associés au dispositif de commande principal (250) dans une topologie en chaîne ou dans une topologie en étoile, et dans lequel la commande de déroulement (209) inclut de préférence des déplacements sur trajectoire planifiés des au moins deux manipulateurs (201, 202) .

8. Système de manipulateur (300) pour la commande coordonnée d'au moins deux manipulateurs (301, 302), comprenant
au moins deux dispositifs de commande principaux juxtaposés (350, 351), à chaque dispositif de commande principal (350, 351) étant associé un des au moins deux manipulateurs (301, 302), et chaque dispositif de commande principal (350, 351) étant agencé pour exécuter une commande de déroulement (309, 310) du manipulateur (301, 302) associé au dispositif de commande principal (350, 351), dans lequel chacun des dispositifs de commande principaux (350, 351) inclut une commande de manipulateur (301S, 302S) et une commande d'axe (305, 306), et dans lequel les commandes de manipulateur (301S, 302S) sont agencées pour envoyer à la commande d'axe respective (305, 306) des instructions de commande des axes du manipulateur associé au dispositif de commande principal (350, 351), et la commande d'axe respective (305, 306) est agencée pour convertir des instructions de commande des axes en instructions de convertisseurs, dans lequel les dispositifs de commande principaux juxtaposés (350, 351) sont séparés spatialement l'un de l'autre, agencés dans respectivement un boîtier propre et comportant respectivement une alimentation énergétique autonome, ainsi qu'un dispositif de commande de coordination (320) qui est séparé spatialement des dispositifs de commande principaux juxtaposés (350, 351) et comporte une alimentation énergétique autonome, dans lequel le dispositif de commande de coordination (320) est agencé pour coordonner les commandes de déroulement (309, 310) des au moins deux manipulateurs (301, 302), de façon que le déroulement de programme des commandes de déroulement (309, 310) s'effectue d'une façon prédéterminée, **caractérisé en ce que** chaque manipulateur (201, 202 ; 301, 302) comporte des convertisseurs (203a, 203b, 203c, 204a, 204b, 204c ; 303a, 303b, 303c, 304a, 304b, 304c) pour commander les actionneurs des axes du manipulateur, et dans lequel le convertisseur (203a, 203b, 203c, 204a, 204b, 204c ; 303a, 303b, 303c, 304a, 304b, 304c) associé à un actionneur est agencé à proximité de l'actionneur, de façon qu'en cas de déplacement du manipulateur (201, 202 ; 301, 302), le convertisseur (203a, 203b, 203c, 204a, 204b, 204c ; 303a, 303b, 303c, 304a, 304b, 304c) puisse être déplacé avec lui, et dans lequel
au moins une commande d'axe (205, 206, 305, 306)est associée à chaque manipulateur, dans lequel la au moins une commande d'axe (205, 206, 305, 306) est disposée sur le manipulateur (201, 202 ; 301, 302) de façon qu'en cas de déplacement du manipulateur (201, 202 ; 301, 302), la au moins une commande d'axe (205, 206, 305, 306) puisse être déplacée avec lui.

9. Système de manipulateur (300) pour la commande coordonnée d'au moins deux manipulateurs (301, 302) selon la revendication 8, dans lequel les dispositifs de commande principaux juxtaposés (350, 351) sont associés au dispositif de commande de coordination (320) dans une topologie en chaîne ou dans une topologie en étoile, dans lequel chaque commande de déroulement (309, 310) inclut de préférence des déplacements sur trajectoire planifiés du manipulateur, lequel est associé au dispositif de commande principal (350, 351) du programme de commande de manipulateur (309, 310).

10. Système de manipulateur (200 ; 300) selon une des revendications 6 à 9, dans lequel à chaque manipulateur sont associés des convertisseurs (203a, 203b, 203c, 204a, 204b, 204c ; 303a, 303b, 303c, 304a, 304b, 304c) pour commander les actionneurs des axes du manipulateur (201, 202 ; 301, 302), et dans lequel les convertisseurs (203a, 203b, 203c, 204a, 204b, 204c ; 303a, 303b, 303c, 304a, 304b, 304c) sont agencés dans le boîtier du dispositif de commande principal (250 ; 350, 351) et/ou du dispositif de commande annexe (251) auquel le manipulateur (201, 202 ; 301, 302) est associé.

11. Système de manipulateur (100 ; 200 ; 300) selon une des revendications précédentes, dans lequel au moins un manipulateur (101, 102 ; 201, 202 ; 301, 302) est un robot industriel, et le au moins second manipulateur est agencé sur un axe du robot industriel.

12. Système de manipulateur (100 ; 200 ; 300) selon une des revendications précédentes, dans lequel le système de manipulateur (100 ; 200 ; 300) est agencé de façon que la coordination des déplacements sur trajectoire planifiés des manipulateurs (101, 102 ; 201, 202 ; 301, 302) s'effectue par l'intermédiaire d'une liaison par bus à base Ethernet (130 ; 230 ; 330, 331).

13. Système de manipulateur (100 ; 200 ; 300) selon une des revendications précédentes, dans lequel le système de manipulateur (100 ; 200 ; 300) est agencé de façon que la coordination des déplacements sur trajectoire planifiés des manipulateurs (101, 102 ; 201, 202 ; 301, 302) soit réalisée par l'intermédiaire d'une synchronisation en temps réel.

14. Système de manipulateur (100 ; 200 ; 300) selon une des revendications précédentes, dans lequel la commande d'axe (105, 106 ; 205, 206 ; 305, 306) est une commande d'axe intelligente, et la commande d'axe intelligente inclut une commande d'angle d'axe des différents axes du manipulateur (101, 102 ; 201, 202 ; 301, 302) et une commande cartésienne supérieure.

15. Système de manipulateur (100 ; 200 ; 300) selon une des revendications précédentes 1 à 5, 8 ou 9, dans lequel un au moins deuxième manipulateur (101, 102 ; 201, 202 ; 301 ; 302) peut être commandé indépendamment d'une perturbation du premier manipulateur (101, 102 ; 201, 202 ; 301, 302) et se comporte conformément à la commande.
